# EUROPEAN PATENT APPLICATION

(11) **EP 4 292 768 A1**
(43) Date of publication of application: **20.12.2023**
(21) Application number: 23176380.6
(22) Date of filing: 31.05.2023
(51) Int. Cl.: B25F 5/02, A01D 34/82

(54) **POWER TOOL USER INTERFACE**

(30) Priority: 13.06.2022 US 202263351495 P
(71) Applicant: Milwaukee Electric Tool Corporation, Brookfield WI 53005-2550 (US)
(72) Inventor: Marolla, David B., Brookfield, WI, 53005-2550 (US)
(74) Representative: Grünecker Patent- und Rechtsanwälte PartG mbB

(57) **Abstract**

User interfaces for power tools are provided. A user interface (200) includes a first actuator (210) moveable between a non-actuated position and an actuated position, the first actuator including a first user actuation member (212) and a latch assembly (214), wherein movement of the user actuation member causes movement of the latch assembly. The user interface further includes a second actuator (230) moveable between a non-actuated position and an actuated position, the second actuator including a second user actuation member (232) and a receiver (234). Movement of the first actuator and the second actuator to the respective actuated positions causes receipt of the latch assembly by the receiver.

## Description

### CROSS-REFERENCE TO RELATED APPLICATIONS

The present application claims priority to U.S. Provisional Patent Application No. 63/351,495 filed on June 13, 2022, the disclosure of which is incorporated by reference herein in its entirety.

### FIELD

The present disclosure relates generally to power tools such as lawnmowers, and in particular to user interfaces for lawnmowers.

### BACKGROUND

Power tools include user interfaces which allow users of the power tools to interact with and operate the power tools. Such power tools include, for example, outdoor power tools such as lawnmowers, tractors, snow throwers, edgers, etc., and may further include other power tools such as drills, saws, etc. As power tool technology has advanced, and in particular as battery-powered power tools have increased in popularity, such interfaces have become increasingly complex.

One result of this complexity is that certain known power tool designs require certain complex user interface operations in order to operate the power tools. For example, certain user interactions with various components of the user interface, in particular orders and/or timeframes, is required for certain known power tool designs. This can be time-consuming and frustrating for the user.

Accordingly, improved user interfaces for power tools, and in particular user interfaces that simplify the required user interaction associated therewith, would be advantageous and are desired in the art.

### BRIEF DESCRIPTION

Aspects and advantages of the invention in accordance with the present disclosure will be set forth in part in the following description, or may be obvious from the description, or may be learned through practice of the technology.

In accordance with one embodiment, a user interface for a power tool is provided. The user interface includes a first actuator moveable between a non-actuated position and an actuated position, the first actuator including a first user actuation member and a latch assembly, wherein movement of the user actuation member causes movement of the latch assembly. The user interface further includes a second actuator moveable between a non-actuated position and an actuated position, the second actuator including a second user actuation member and a receiver. Movement of the first actuator and the second actuator to the respective actuated positions causes receipt of the latch assembly by the receiver.

In accordance with another embodiment, a user interface for a power tool is provided. The user interface includes a first actuator moveable between a non-actuated position and an actuated position, the first actuator including a first user actuation member and a cam, wherein movement of the user actuation member causes movement of the cam. The user interface further includes a follower in selective communication with the cam, wherein movement of the cam causes contact with and movement of the follower. The user interface further includes a second actuator moveable between a non-actuated position and an actuated position, the second actuator including a second user actuation member and a receiver. Movement of the first actuator and the second actuator to the respective actuated positions causes receipt of the follower by the receiver.

In according with another embodiment, a lawnmower is provided. The lawnmower includes a body, a handle extending from the body, a prime mover, a cutting blade, and a user interface. The user interface includes one or more features of one or more of the above-described embodiments.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 provides a perspective view of a lawnmower in accordance with embodiments of the present disclosure;
FIG. 2 provides a cross-sectional view of a user interface with a first actuator and second actuator in non-actuated positions in accordance with embodiments of the present disclosure;
FIG. 3 provides a cross-sectional view of a user interface with a first actuator in an actuated position and a second actuator in a non-actuated position in accordance with embodiments of the present disclosure;
FIG. 4 provides a cross-sectional view of a user interface with a first actuator in an actuated position and a second actuator during movement from a non-actuated position to an actuated position in accordance with embodiments of the present disclosure;
FIG. 5 provides a cross-sectional view of a user interface with a first actuator and second actuator in actuated positions in accordance with embodiments of the present disclosure;
FIG. 6 provides a cross-sectional view of a user interface with a first actuator and second actuator in non-actuated positions in accordance with embodiments of the present disclosure;
FIG. 7 provides a cross-sectional view of a user interface with a first actuator in a non-actuated position and a second actuator in an actuated position in accordance with embodiments of the present disclosure;
FIG. 8 provides a cross-sectional view of a user interface with a first actuator during movement from a non-actuated position to an actuated position and a second actuator in an actuated position in accordance with embodiments of the present disclosure;
FIG. 9 provides a cross-sectional view of a user interface with a first actuator and second actuator in actuated positions in accordance with embodiments of the present disclosure; and
FIG. 10 provides a cross-sectional view of a user interface with a first actuator and second actuator in actuated positions in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

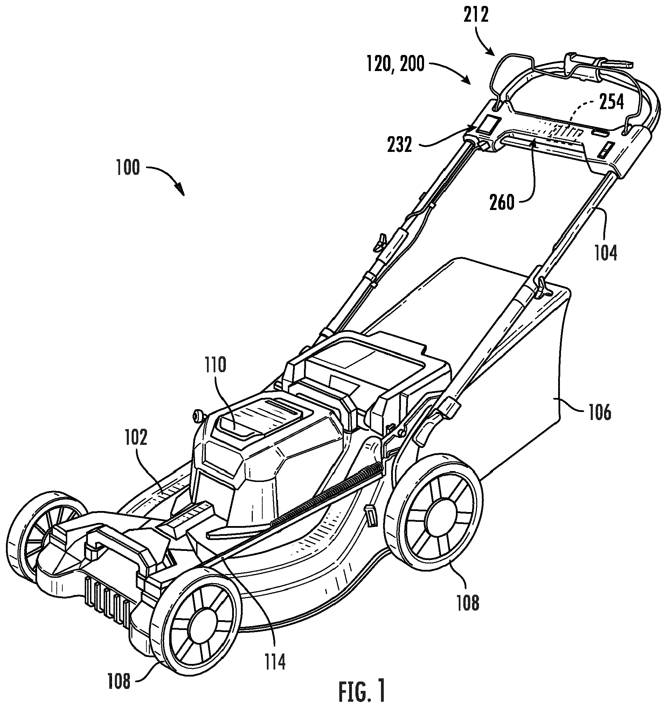

Referring now to the drawings, FIG. 1 illustrates a lawnmower 100 in accordance with an exemplary embodiment of the present disclosure. The lawnmower 100 generally includes a body 102, a handle 104 extending from the body 102 to allow an operator to push or control the lawnmower 100, a bagging unit 106 coupled with the body 102 and configured to collect debris and clippings ejected from a mowing area of the body 102 when the lawnmower 100 is in use, and a plurality of walking elements in the form of, e.g., wheels 108. The lawnmower 100 further includes a battery storage area 110 configured to receive one or more batteries (not illustrated) and a prime mover, such as a motor (not shown), which drives the wheels 108. The lawnmower 100 can further include a deck height adjustment assembly 114 which allows the operator to control a height of cut. The deck height adjustment 114 may be adjustable through an interface located at the handle 104. The lawnmower 100 may further include a user interface 120. The user interface 120 may be connected to the handle 104 or located at another suitable location on the lawnmower 100. User interface 120 allows a user to control operation of the lawnmower 100, such as by starting and stopping operation of the lawnmower (and specifically the motor(s) thereof). While the lawnmower 100 depicted in FIG. 1 is a walking mower (i.e., an operator walks behind the mower to control the mower), in one or more other embodiments, the lawnmower 100 can include a riding lawnmower or even another type of equipment, such as, e.g., a tractor, a snow thrower, an edger, or the like.

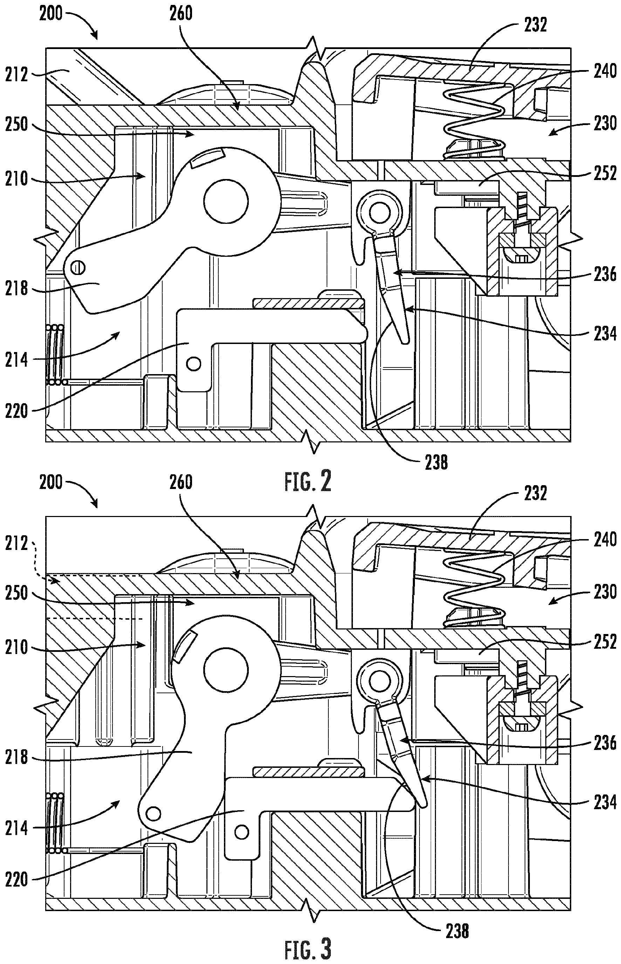

Referring now to FIGS. 2 through 10, various embodiments of a user interface 200 for a power tool are disclosed herein. While in exemplary embodiments the user interface 200 may be utilized as the user interface 120 of a lawnmower 100, in alternative embodiments the user interface 200 may be utilized as the user interface of another suitable outdoor tool, such as a tractor, snow thrower, edger, etc., or any other suitable power tool. In general, a user interface 200 in accordance with the present disclosure allows a user to control operation of the power tool. For example, the user may utilize the user interface 200 to start and stop operation of the power tool as desired. For example, in embodiments wherein the power tool is a lawnmower 100, the user interface 200 may facilitate starting and stopping of the motor which operates the blade(s) and/or wheels. User interfaces 200 in accordance with the present disclosure advantageously utilize a first and second actuator, both of which are moveable between non-actuated positions and actuated positions. The power tool may start when both the first and second actuator are in the actuated positions, and may stop or not start when either the first or second actuator (or both) is in the non-actuated position. Further, in exemplary embodiments, the order of actuation of the first and second actuator is irrelevant to starting of the power tool, such that starting occurs whether the first actuator is actuated prior to the second actuator or whether the second actuator is actuated prior to the first actuator.

As shown, a user interface 200 includes a first actuator 210. First actuator 210 is movable between a non-actuated position, as illustrated in FIGS. 2, 6, and 7, and an actuated position, as illustrated in FIGS. 3 through 5, 9, and 10. First actuator 210 may include, for example, a first user actuation member 212 and a latch assembly 214.

The first user actuation member 212 may be a portion of the first actuator 210 which is accessible and contactable by a user in order for the user to actuate the first actuator 210. For example, in exemplary embodiments, the first user actuation member 212 may be a bail, as illustrated. In alternative embodiments, other suitable members such as levers, buttons, etc. may be utilized. First user actuation member 212 may be moveable, such as by a user, between non-actuated and actuated positions.

In exemplary embodiments, the movement of first actuator 210 generally and first user actuation member 212 is rotational movement, such that the first actuator 210 generally and first user actuation member 212 are rotational between the actuated and non-actuated positions.

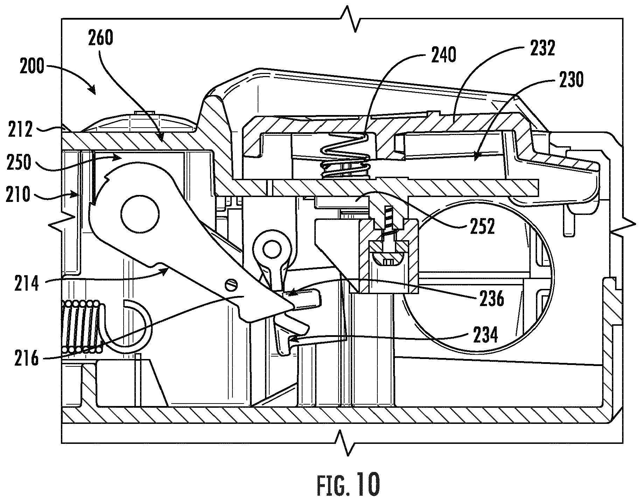

As discussed, first actuator 210 may further include a latch assembly 214. Movement of the first user actuation member 212 may cause movement of the latch assembly 214. For example, with reference to FIG. 10, in some embodiments, the latch assembly 214 includes a latch 216. Latch 216 may, in exemplary embodiments, be fixed relative to the first user actuation member 212, such as fixed to the first user actuation member 212. Accordingly, movement (such as rotation) of the first user actuation member 212 may cause movement (such as rotation) of the latch 216. With reference to FIGS. 2 through 9, in other embodiments, the latch assembly 214 includes a cam 218 and a follower 220. The cam 218 may be connected to the first user actuation member 212. Further, cam 218 may, in exemplary embodiments, be fixed relative to the first user actuation member 212, such as fixed to the first user actuation member 212. Accordingly, movement (such as rotation) of the first user actuation member 212 may cause movement (such as rotation) of the cam 218. The follower 220 may be in selective communication with the cam 218, and movement of the cam 218 may cause contact with and movement of the follower 220. For example, when the first actuator 210 is in the non-actuated position, the cam 218 may be not in contact with the follower 220. During movement of the first actuator 210 from the non-actuated position to the actuated position, the cam 218 may encounter and contact the follower 220, and may cause movement of the follower 220. In some exemplary embodiments as shown, the movement of the follower 220 may be translational movement.

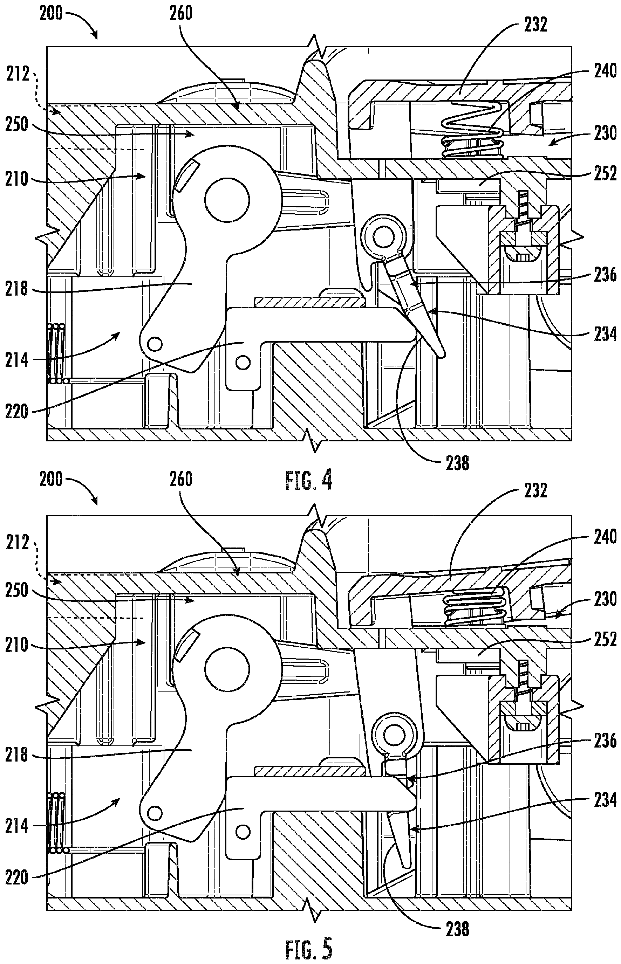

As shown, a user interface 200 further includes a second actuator 230. Second actuator 230 is movable between a non-actuated position, as illustrated in FIGS. 2, 3, and 6, and an actuated position, as illustrated in FIGS. 5, 7 through 9, and 10. Second actuator 230 may include, for example, a second user actuation member 232 and a receiver 234.

The second user actuation member 232 may be a portion of the second actuator 230 which is accessible and contactable by a user in order for the user to actuate the second actuator 230. For example, in exemplary embodiments, the second user actuation member 232 may be a button, as illustrated. In alternative embodiments, other suitable members such as levers, bails, etc. may be utilized. Second user actuation member 232 may be moveable, such as by a user, between non-actuated and actuated positions.

In exemplary embodiments, the movement of second actuator 230 generally and second user actuation member 232 is rotational movement, such that the second actuator 230 generally and second user actuation member 232 are rotational between the actuated and non-actuated positions.

The receiver 234 may be connected to the second user actuation member 232. In exemplary embodiments, as discussed in more detail below, the receiver 234 may be movable relative to second user actuation member 232. For example, as shown, the receiver 234 may be pivotable relative to the second user actuation member 232 while remaining connected to the second user actuation member 232.

In some exemplary embodiments, receiver 234 may include a slot 236. The slot 236 may receive a component of the latch assembly 214 therein, as discussed herein. Further, in some embodiments, the receiver 234 may include an angled contact surface 238 which may interact with a component of the latch assembly 214, as discussed herein. Such angled contact surface 238 may be angled relative to a longitudinal axis of the receiver 234.

As shown, movement of the first actuator 210 and the second actuator 230 to their respective actuated positions may cause receipt of the latch assembly 214 (such as a component thereof) by the receiver 234. For example, the latch assembly 214 (such as a component thereof) may be received in a slot 236. In embodiments wherein the latch assembly 214 includes a latch 216, the latch 216 may be received by the receiver 234, such as in the slot 236. In embodiments wherein the latch assembly 214 includes a cam 218 and follower 220, the follower 220 may be received by the receiver 234, such as in the slot 236.

In exemplary embodiments, as shown, the receipt of the latch assembly 214 by the receiver 234 secures the second actuator 230 in the actuated position while the first actuator 210 is in the actuated position. When the first actuator 210 is released by the user from the actuated position and moved to the non-actuated position, the latch assembly 214 may be removed from the receiver 234, thereby releasing the second actuator 230 to move from the actuated position to the non-actuated position.

In exemplary embodiments, the second actuator 230 further includes a biasing member 240, such as a spring (e.g. a compression spring) as shown. The biasing member 240 may bias the second user actuation member 232 and second actuator 230 generally towards the non-actuated position. Accordingly, when the second actuator 230 is released as discussed, the second actuator 230 may automatically move from the actuated position to the non-actuated position due to the influence of the biasing member 240.

In exemplary embodiments, the order of actuation of first and second actuators 210, 230 is irrelevant, and the receipt of the latch assembly 214 by the receiver 234, and thus the securement of the second actuator 230 in the actuated position, occurs whether the first actuator 210 is actuated before the second actuator 230 or whether the second actuator 230 is actuated before the first actuator 210.

FIGS. 2 through 5 illustrate a progression of actuation of the first and second actuators 210, 230 when the first actuator 210 is actuated before the second actuator 230. FIG. 2 illustrates both the first actuator 210 and second actuator 230 in non-actuated positions. FIG. 3 illustrate the first actuator 210 in an actuated position, and the second actuator 230 in a non-actuated position. In FIG. 3, the cam 218 moved until it contacted the follower 220, such that the follower 220 moved towards the receiver 234 and into contact with the angled contact surface 238. FIG. 4 illustrates the first actuator 210 in the actuated position and the second actuator 230 during movement from the non-actuated position to the actuated position. In FIG. 4, the receiver 234 moves relative to the follower 220. For example, angled contact surface 238 and pivotable movement of the receiver 234 allow such movement, as illustrated. FIG. 5 illustrates the first actuator 210 and second actuator 230 in the actuated positions. In FIG. 5, the receiver 234 has continued to move relative to the follower 220 until the receiver 234 receives the latch assembly 214, such as the follower 220 thereof. For example, angled contact surface 238 and pivotable movement of the receiver 234 allow such movement, until the follower 220 reaches and is received by the slot 236.

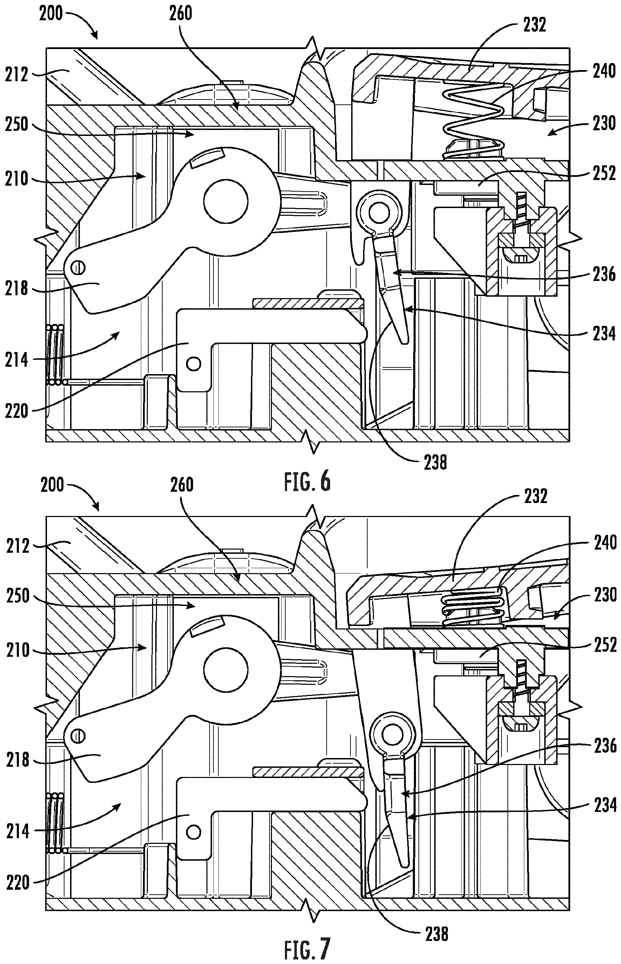

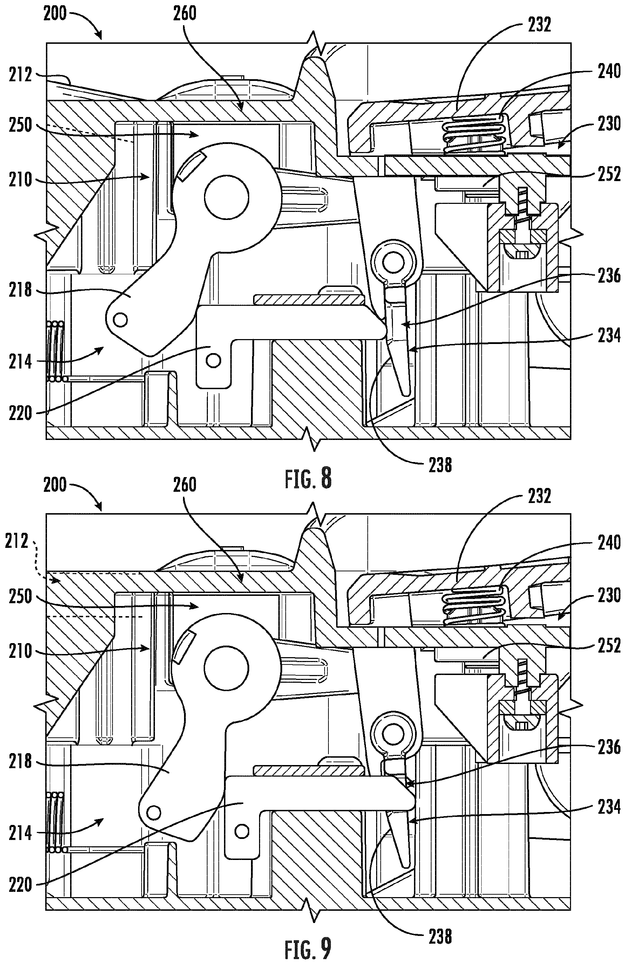

FIG. 6 illustrates both the first actuator 210 and second actuator 230 in non-actuated positions. FIG. 7 illustrates the first actuator 210 in a non-actuated position, and the second actuator 230 in an actuated position. FIG. 8 illustrates the first actuator 210 during movement from the non-actuated position to the actuated position while the second actuator 230 is in the actuated position. In FIG. 8, the cam 218 moved until it has contacted the follower 220, such that the follower 220 has begun movement towards the receiver 234. FIG. 9 illustrates the first actuator 210 and second actuator 230 in the actuated positions, with the latch assembly 214, such as the follower 220 thereof, received by the receiver 234, such as the slot 236 thereof.

As discussed, user interface 200 may allow a user to control operation of a power tool. For example, a user may interact with the user interface 200 to start and stop the power tool or a function thereof. Accordingly, user interface 200 may further include control features which are in communication with the first and second actuators 210, 230 and various components of the power tool, such as batteries and/or motors thereof, to start and stop the power tool or such components thereof.

In some embodiments, first and second actuators 210, 230 may include components which interact with such control features. For example, first actuator may include a sensor 250, which may for example, be a hall sensor. Sensor 250 may detect the movement and/or position of the first user actuation member 212. Second actuator may include a switch 252. Switch 252 may detect the movement and/or position of the second user actuation member 232.

The user interface 200 may, for example, further include a controller 254, which may for example, include or be a printed circuit board. Sensor 250 and switch 252 may be in communication with the controller 254, which may in turn be in communication with other components of the power tool, such as batteries and/or motors thereof, to start and stop the power tool or such components thereof based on signals received from the sensor 250 and/or switch 252.

User interface 200 may further include a housing 260. In exemplary embodiments, first user actuation member 212 and second user actuation member 232 protrude from housing 260 such that a user can access and interact with the members 212, 232 and actuators 210, 230 generally. Other components of the user interface 200, such as the latch assembly 214 and component(s) thereof, the receiver 234, the biasing member 240, the sensor 250, the switch 252, and/or the controller 254, may be provided within an interior of the housing 260.

Further aspects of the invention are provided by one or more of the following embodiments:
A user interface for a power tool. The user interface includes a first actuator moveable between a non-actuated position and an actuated position, the first actuator including a first user actuation member and a latch assembly, wherein movement of the user actuation member causes movement of the latch assembly. The user interface further includes a second actuator moveable between a non-actuated position and an actuated position, the second actuator including a second user actuation member and a receiver. Movement of the first actuator and the second actuator to the respective actuated positions causes receipt of the latch assembly by the receiver.

A user interface for a power tool. The user interface includes a first actuator moveable between a non-actuated position and an actuated position, the first actuator including a first user actuation member and a cam, wherein movement of the user actuation member causes movement of the cam. The user interface further includes a follower in selective communication with the cam, wherein movement of the cam causes contact with and movement of the follower. The user interface further includes a second actuator moveable between a non-actuated position and an actuated position, the second actuator including a second user actuation member and a receiver. Movement of the first actuator and the second actuator to the respective actuated positions causes receipt of the follower by the receiver.

A user interface in accordance any one or more embodiments, wherein the latch assembly includes a latch, the latch receivable by the receiver.

A user interface in accordance any one or more embodiments, wherein the latch is fixed relative to the first user actuation member.

A user interface in accordance any one or more embodiments, wherein the latch assembly includes a cam and a follower, the follower in selective communication with the cam, wherein movement of the cam causes contact with and movement of the follower, and wherein the follower is receivable by the receiver.

A user interface in accordance any one or more embodiments, wherein the cam is fixed relative to the first user actuation member.

A user interface in accordance any one or more embodiments, wherein the receipt of the latch assembly by the receiver occurs when movement of the first actuator occurs before movement of the second actuator and when movement of the second actuator occurs before movement of the first actuator.

A user interface in accordance any one or more embodiments, wherein the receiver includes an angled contact surface and defines a slot, and wherein the latch assembly is received in the slot.

A user interface in accordance any one or more embodiments, wherein the receiver is movable relative to the second user actuation member.

A user interface in accordance any one or more embodiments, wherein the first user actuation member is a bail.

A user interface in accordance any one or more embodiments, wherein the second user actuation member is a button.

A user interface in accordance any one or more embodiments, wherein the second actuator further includes a switch and the first actuator further comprises a sensor.

A user interface in accordance any one or more embodiments, further including a controller, and wherein the switch and the sensor are in communication with the controller.

A user interface in accordance with one or more embodiments as shown and described herein.

A lawnmower in accordance with one or more embodiments as shown and described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A user interface for a power tool, the user interface comprising:
a first actuator moveable between a non-actuated position and an actuated position, the first actuator comprising a first user actuation member and a latch assembly, wherein movement of the user actuation member causes movement of the latch assembly;
a second actuator moveable between a non-actuated position and an actuated position, the second actuator comprising a second user actuation member and a receiver,
wherein movement of the first actuator and the second actuator to the respective actuated positions causes receipt of the latch assembly by the receiver.

2. The user interface of claim 1, wherein the latch assembly comprises a latch, the latch receivable by the receiver.

3. The user interface of claim 2, wherein the latch is fixed relative to the first user actuation member.

4. The user interface of any of claims 1-3, wherein the latch assembly comprises a cam and a follower, the follower in selective communication with the cam, wherein movement of the cam causes contact with and movement of the follower, and wherein the follower is receivable by the receiver.

5. The user interface of claim 4, wherein the cam is fixed relative to the first user actuation member.

6. The user interface of any of claims 1-5, wherein the receipt of the latch assembly by the receiver occurs when movement of the first actuator occurs before movement of the second actuator and when movement of the second actuator occurs before movement of the first actuator.

7. The user interface of any of claims 1-6, wherein the receiver comprises an angled contact surface and defines a slot, and wherein the latch assembly is received in the slot.

8. The user interface of any of claims 1-7, wherein the receiver is movable relative to the second user actuation member.

9. The user interface of any of claims 1-8, wherein the first user actuation member is a bail.

10. The user interface of any of claims 1-9, wherein the second user actuation member is a button.

11. The user interface of any of claims 1-10, wherein the second actuator further comprises a switch and the first actuator further comprises a sensor.

12. The user interface of claim 11, further comprising a controller, and wherein the switch and the sensor are in communication with the controller.

13. A lawnmower, comprising:
a body;
a handle extending from the body;
a prime mover;
a cutting blade; and
the user interface of claim 1.
